# EUROPÄISCHE PATENTSCHRIFT

(11) **EP 1 769 261 B1**
(45) Veröffentlichungstag und Bekanntmachung des Hinweises auf die Patenterteilung: **13.05.2009**
(21) Anmeldenummer: 05757903.9
(22) Anmeldetag: 30.06.2005
(51) Int. Cl.: G01S 5/02

(54) **VORRICHTUNG UND VERFAHREN ZUM ERMITTELN EINER AKTUELLEN POSITION EINES MOBILEN GERÄTES**
DEVICE AND METHOD FOR DETERMINING THE CURRENT POSITION OF A MOBILE DEVICE
SYSTEME ET PROCEDE POUR DETERMINER UNE POSITION ACTUELLE D'UN APPAREIL MOBILE

(30) Priorität: 22.07.2004 DE 102004035531
(43) Veröffentlichungstag der Anmeldung: 04.04.2007
(73) Patentinhaber: Fraunhofer-Gesellschaft zur Förderung der angewandten Forschung e.V., 80686 München (DE)
(72) Erfinder: HUPP, Jürgen, 90425 Nürnberg (DE); MEYER, Steffen, 91052 Erlangen (DE); BLIESZE, Marcus, 91058 Erlangen (DE); SIPPL, Melanie, 90403 Nürnberg (DE)
(74) Vertreter: Stöckeler, Ferdinand
(86) Internationale Anmeldenummer: PCT/EP2005/007083
(87) Internationale Veröffentlichungsnummer: WO 2006/010429

(56) Entgegenhaltungen:
- EP-A- 1 022 578
- EP-A- 1 109 031
- WO-A-20/04008795

## Beschreibung

Die vorliegende Erfindungsmeldung bezieht sich auf Positionsbestimmung von mobilen Geräten.

Mit stetig zunehmender Verbreitung von handlichen, mobilen Geräten (z.B. PDAs) in Verbindung mit einer flächendeckenden Verfügbarkeit von digitalen Übertragungstechnologien (z. B. WLAN, etc. UMTS, GPRS) wächst der Markt für Anwendungen, die den Nutzer in jeder Situation mit standortrelevanten Informationen versorgen. Aus diesem Grunde wächst die Bedeutung einer effizienten Lokalisierung von mobilen Geräten für moderne, benutzerfreundliche Anwendungen.

Im Bereich innerhalb von Gebäuden (Indoor-Bereich) ist die Entwicklung von geeigneten Lokalisierungsverfahren eine Herausforderung, da Wände und Einrichtungsgegenstände den Einsatz gängiger Positionierungs-Technologien erheblich erschweren oder unmöglich machen können. Doch gerade in Gebäuden oder im kombinierten Innen- und Außenbereich ergeben sich vielfältige ortsabhängige Anwendungen, wie z. B. Führungs- oder Leitsysteme zum Auffinden von Räumen, Gegenständen und Mitarbeitern, Patientennotfallsysteme im medizinischen Bereich oder Anwendungen im Bereich des Workfloor-Managements.

Um diese Unterstützung sinnvoll durchführen zu können, ist es unumgänglich, dass ein Teilnehmer zu jedem Zeitpunkt (respektive an jedem Ort des Gebäudes, also flächendeckend) in der Lage ist, seine Position im Gebäude abzufragen.

Bei den bekannten Verfahren zur Positionsbestimmung handelt es sich beispielsweise um GPS, Triangulation über Laufzeitmessungen oder auch Funkzellenerkennung über Basisstationsidentifikation. Nachteilig an diesen Konzepten ist jedoch deren große Komplexität, die mit hohen Kosten verbunden ist, sowie eine unter Umständen hohe Ungenauigkeit.

WO 02/054813 A1 offenbart ein Verfahren zum Schätzen einer Position eines Empfängers in einer drahtlosen Kommunikationsumgebung, die über mehrere Kanäle verfügt. Jeder Kanal hat zumindest einen Signalparameter, der in Abhängigkeit von der Position variiert, wobei diese Variierung für jeden Kanal unterschiedlich ist. Für jeden Kalibrierungspunkt wird ein Satz von Kalibrierungsdaten bestimmt, wobei jeder Satz die Position und zumindest einen gemessenen Signalparameter für jeden der Kanäle umfasst. Die Kalibrierungsdaten dienen als eine Basis für ein statistisches Modell der Signalparameter in Abhängigkeit von einer Position des Empfängers. Es wird ferner ein Satz von beobachteten Signalparametern bestimmt, der zumindest einen Signalparameter für jeden der Mehrzahl der Kanäle umfasst. Auf der Basis des statistischen Modells und des Satzes der beobachteten Signalparameter wird die Position des Empfängers approximiert. Da dieses Verfahren von der Annahme ausgeht, das jedem der Kanäle ein unterschiedlicher Signalparameter zugeordnet werden kann, der für diesen Kanal und an einer bestimmten Position unterschiedlich von allen anderen Signalparametern ist, kann dieses Verfahren ausschließlich für ein derartiges Szenario eingesetzt werden. Ein weiterer Nachteil an dem in der obigen Schrift offenbarten Konzept besteht darin, dass das statistische Modell auf der Basis einer Wahrscheinlichkeitsverteilung gewonnen wird, was mit einer hohen Berechnungskomplexität sowie einer Restunsicherheit hinsichtlich der Position des Empfängers verbunden ist.

Die EP 1022578 A2 befasst sich mit einer Vorrichtung, die eine Funksignalstärke verwendet, um die momentane Position eines mobilen Körpers relativ zu einer Karte abzuschätzen. Die Vorrichtung empfängt periodisch einen Satz gemessener Werte der Funkfeldstärke jeweiliger Funksignale von einer Mehrzahl von Basisstationen von dem mobilen Körper, speichert diese Sätze und wendet Mittelungsverfahren auf die gesamte Sequenz von Sätzen von gemessenen Funksignalstärkewerten an, um eine entsprechende Sequenz von Sätzen von geglätteten Funksignalstärkewerten zu erhalten. Basierend auf vorher gemessenen Werten der Funksignalstärke, die vorher für jeden einer Mehrzahl von vorbestimmten Punkten, wie z.B. Straßenkreuzungen, erhalten wurden, ist die Vorrichtung hinsichtlich der Sequenz von Sätzen von geglätteten Funksignalstärkewerten wirksam, um diejenigen der vorbestimmten Punkte abzuschätzen, die durch den mobilen Körper nacheinander bis zum momentanen Zeitpunkt überquert wurden, um dadurch die momentane Position des mobilen Körpers abzuschätzen.

Aus der WO 98/15149 ist ein Verfahren zum Lokalisieren einer Mobilstation bekannt, bei dem Informationen, die durch eine Mobilstation empfangen und gemessen werden, zu einem Netzwerkverwaltungssystem übertragen werden. Die Informationen werden mit den Feldstärkeinformationen in einer Feldstärkematrix verglichen, wobei der Ort der Mobilstation als Koordinaten der Feldstärkematrix relativ zu der Basisstation der Dienststelle und der Basisstation einer Nachbarzelle abgeschätzt wird, auf eine solche Weise, dass die Informationen, die durch die Mobilstation empfangen und gemessen werden, den Feldstärkeinformationen in der Feldstärkematrix so genau wie möglich entsprechen.

Aus der EP-A-1109031 ist ein System zum Lokalisieren eines mobilen Terminals bekannt, bei dem ein mobiles Terminal in ein Kommunikationssystem eingebunden ist und Funksignale mit mindestens einer Basisstation austauscht. Es bewegt sich frei innerhalb eines vorgegebenen Überwachungsbereichs. Zur Lokalisierung des Terminals werden mindestens zwei (vorzugsweise mehrere) verschiedene Positionsschätzungen gemacht. Jede dieser Positionsschätzungen kann zusätzlich mit einem Wahrscheinlichkeitswert versehen werden. Als aktuelle Position wird diejenige bestimmt, die unter Berücksichtigung der in mindestens einem vergangenen Zeitpunkt (d.h. einem früheren Überwachungszyklus) ermittelten Positionsschätzung einen Fortbewegungspfad größter oder zumindest erhöhter Wahrscheinlichkeit ergibt. Allgemein gesagt, wird die aktuelle Position nicht isoliert sondern vor dem Hintergrund einer zeitlichen Verkettung hoher Wahrscheinlichkeit ermittelt. Dabei kann ein Viterbi-Algorithmus zur Anwendung kommen.

Es ist die Aufgabe der vorliegenden Erfindung, ein effizientes Konzept zur Positionsbestimmung zu schaffen.

Diese Aufgabe wird durch eine Vorrichtung zum Ermitteln einer aktuellen Position eines mobilen Gerätes gemäß Anspruch 1, oder durch ein Verfahren zum Ermitteln einer aktuellen Position eines mobilen Gerätes gemäß Anspruch 12 oder durch ein Computerprogramm gemäß Anspruch 13 gelöst.

Die vorliegende Erfindung basiert auf der Erkenntnis, dass eine Position eines mobilen Gerätes in einer Umgebung, in der eine oder mehrere Basisstationen angeordnet sind, effizient bestimmt werden kann, indem ein kartographisches Modell der Umgebung, das beispielsweise Hindernisse aufweist, herangezogen wird, um auf der Basis eines beispielsweise aktuell gemessenen Feldstärkewertes und einer beispielsweise zu einem früheren Zeitpunkt bestimmten Position des mobilen Gerätes dessen aktuelle Position zu ermitteln, die am wahrscheinlichsten ist.

Dadurch, dass bei der Positionsbestimmung ein Umgebungsmodell herangezogen wird, können, ausgehend von beispielsweise einer vorherig bestimmten Position des mobilen Gerätes, Positionen von vornherein ausgeschlossen werden, die ausgehend von der vorherigen Position von dem mobilen Gerät entweder aufgrund eines Hindernisses nicht erreicht werden können oder die innerhalb eines Zeitintervalls, beispielsweise einer Millisekunde, durch Bewegung des mobilen Gerätes nicht erreichbar sind. Analog kann im Vorfeld, ausgehend von der vorherigen Position, eine Vorauswahl der Positionen getroffen werden, die für die aktuelle Position des mobilen Gerätes überhaupt in Frage kommen. Dadurch wird zum Einen die Positionsbestimmung vereinfacht, da eine Anzahl der in Frage kommenden Positionen reduziert wird. Zum Anderen kann dadurch eine sichere und genaue Positionsbestimmung erzielt werden.

Weitere Ausführungsbeispiele der vorliegenden Erfindung werden anhand von beiliegenden Zeichnungen näher erläutert. Es zeigen:
- Fig. 1: eine Vorrichtung zum Ermitteln einer aktuellen Position eines mobilen Gerätes gemäß einem Aus- führungsbeispiel der vorliegenden Erfindung;
- Fig. 2: das erfindungsgemäße Konzept;
- Fig. 3: Ermittlung einer aktuellen Position eines mobilen Gerätes gemäß einem weiteren Ausführungsbeispiel; und
- Fig. 4: Ermittlung einer aktuellen Position eines mobilen Gerätes gemäß einem weiteren Ausführungsbeispiel.

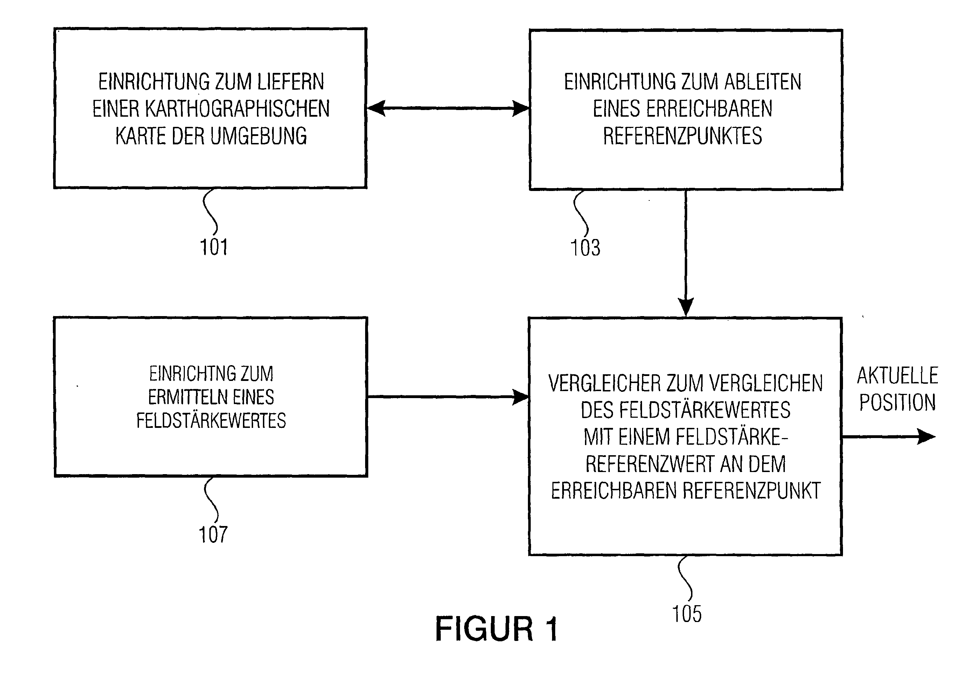

Fig. 1 zeigt ein prinzipielles Blockdiagramm einer erfindungsgemäßen Vorrichtung zum Ermitteln einer aktuellen Position eines mobilen Gerätes in einer Umgebung, in der zumindest ein Sender, beispielsweise eine Basisstation, angeordnet ist. Die Vorrichtung umfasst eine Einrichtung 101 zum Liefern einer kartographischen Karte der Umgebung, die bevorzugt Feldstärkereferenzwerte an Referenzpunkten der Umgebung umfasst. Die Einrichtung 101 zum Liefern der kartographischen Karte der Umgebung ist gekoppelt mit einer Einrichtung 103 zum Ableiten eines erreichbaren Referenzpunktes, der ausgehend von einer vorherigen Position, die beispielsweise zu einem vorherigen Zeitpunkt bestimmt worden ist, durch Bewegung des mobilen Gerätes in der Umgebung innerhalb eines vorbestimmten Zeitintervalls erreichbar ist. Die Einrichtung 103 zum Ableiten des erreichbaren Referenzpunktes ist gekoppelt mit einem Vergleicher 105 zum Vergleichen eines Feldstärkewertes mit einem Feldstärkereferenzwert an dem erreichbaren Referenzpunkt. Bei dem Feldstärkewert handelt es sich um einen Feldstärkewert an der aktuellen Position des mobilen Gerätes. Um diesen Feldstärkewert zu ermitteln, umfasst die in Fig. 1 gezeigte Vorrichtung ferner eine Einrichtung 107 zum Ermitteln eines Feldstärkewertes, die mit dem Vergleicher 105 gekoppelt ist.

Bevorzugt ist die Einrichtung 107 zum Ermitteln des Feldstärkewertes ausgebildet, um den Feldstärkewert an der aktuellen Position, an der sich das mobile Gerät momentan befindet, zu messen. Hierzu kann die Einrichtung 107 zum Ermitteln des Feldstärkewertes beispielsweise einen Feldstärkesensor umfassen. Gemäß einem weiteren Ausführungsbeispiels umfasst die Einrichtung 107 zum Ermitteln des Feldstärkewertes einen Empfänger, der ausgebildet ist, um die von dem in der Umgebung aufgestellten Sender oder um die von einer Mehrzahl von der in der Umgebung aufgestellten Sendern ausgestrahlten elektromagnetischen Wellen zu empfangen, und um auf der Basis der empfangenen Wellen die Feldstärkewerte zu ermitteln.

Gemäß einem weiteren Ausführungsbeispiel der vorliegenden Erfindung ist die Einrichtung 107 ausgebildet, um die Feldstärkewerte in regelmäßigen Messintervallen zu messen. Beispielsweise ist die Einrichtung 107 zum Ermitteln des Feldstärkewertes ausgebildet, um die Feldstärkewerte zu regelmäßigen Zeitpunkten, die die Messintervalle definieren, zu messen, wobei ein zeitlicher Abstand zwischen zwei Messzeitpunkten beispielsweise eine Millisekunde beträgt.

Darüber hinaus kann die Einrichtung 107 zum Ermitteln des Feldstärkewertes ausgebildet sein, um die für die Positionsbestimmung benötigten Feldstärkereferenzwerte beispielsweise während einer Einlernphase zu ermitteln. Hierzu kann die Einrichtung 107 zum Ermitteln ausgebildet sein, um einen Feldstärkereferenzwert durch eine Mittelung zwischen einem aktuell gemessenen Feldstärkewert und einem zu einem früheren Zeitpunkt bestimmten Mittelwert von gemessenen Feldstärkewerten zu bestimmen.

Um die kartographische Karte der Umgebung hinsichtlich der Feldstärkereferenzwerte zu aktualisieren, kann die Einrichtung 101 zum Liefern der kartographischen Karte der Umgebung ausgebildet sein, um einen oder mehrere Feldstärkereferenzwerte, die von der Einrichtung 107 zum Ermitteln des Feldstärkewertes bestimmt worden sind, in die kartographische Karte der Umgebung an den dazugehörigen Referenzpunkten einzutragen, wobei ein Referenzpunkt beispielsweise durch eine Angabe seiner dreidimensionalen Koordinaten (x, y, z), beispielsweise in Metern, in der Umgebung lokalisierbar ist.

Die Einrichtung 103 zum Ableiten des erreichbaren Referenzpunktes kann bevorzugt ausgebildet werden, um den erreichbaren Referenzpunkt aus der kartographischen Karte der Umgebung abzuleiten. Bei dem vorbestimmten Zeitintervall kann es sich beispielsweise um ein Zeitintervall zwischen zwei aufeinanderfolgenden Messvorgängen handeln, die von der Einrichtung 107 zum Ermitteln des Feldstärkewertes durchgeführt werden. Das Zeitintervall kann beispielsweise zwischen einer und 10 ms sein.

Gemäß einem weiteren Ausführungsbeispiel der vorliegenden Erfindung ist die Einrichtung 107 zum Ableiten eines erreichbaren Referenzpunktes ausgebildet, um den erreichbaren Referenzpunkt auf der Basis einer Berechnung eines kürzesten Weges zwischen einer vorherigen Position des mobilen Gerätes und einer Mehrzahl von der vorherigen Position aus durch Bewegung des mobilen Gerätes erreichbaren Referenzpunkten zu bestimmen.

Beispielsweise ist die Einrichtung 103 ausgebildet, um eine Routing-Karte zu erstellen, die alle möglichen Verbindungen zwischen Referenzpunkten in der Umgebung, die durch Bewegung des mobilen Gerätes erreichbar sind, umfasst. Beispielsweise ist die Einrichtung 107 zum Ableiten ausgebildet, um eine kürzeste Verbindung zwischen einem ersten Referenzpunkt und einem zweiten Referenzpunkt zu berechnen, die dann eine mögliche Verbindung darstellt, wobei hierzu beispielsweise graphentheoretische Algorithmen eingesetzt werden können.

Gemäß einem weiteren Ausführungsbeispiel der vorliegenden Erfindung ist die Einrichtung 103 zum Ableiten ausgebildet, um die oben erwähnte Routing-Karte unter Verwendung eines Routing-Algorithmus, beispielsweise des Dijkstra-Algorithmus, zu bestimmen.

Der in Figur 1 dargestellte Vergleicher 105 ist bevorzugt ausgebildet, um die aktuelle Position des mobilen Gerätes auf der Basis eines Vergleiches des aufgenommenen Feldstärkewertes an der aktuellen Position mit bevorzugt einer Mehrzahl von Feldstärkereferenzwerten an verschiedenen, von der vorherigen Position aus erreichbaren Referenzpunkten, zu bestimmen, wobei die aktuelle Position dem Referenzpunkt in der Umgebung entspricht, dem ein Feldstärkereferenzwert zugeordnet ist, der einen geringsten Unterschied zu dem aktuell aufgenommenen Feldstärkewerts aufweist. Mit anderen Worten ausgedrückt ist der Vergleicher 105 ausgebildet, um den Feldstärkewert mit dem Feldstärkereferenzwert an dem erreichbaren Referenzpunkt und mit einem weiteren Feldstärkereferenzwert an einem weiteren Referenzpunkt, der von der vorherigen Position aus erreichbar ist, zu vergleichen, und um einen Referenzpunkt als die aktuelle Position zu ermitteln, der mit einem Feldstärkereferenzwert zusammenhängt, der dem Feldstärkewert am ehesten entspricht.

Gemäß einem weitern Aspekt der vorliegenden Erfindung kann der Vergleicher 105 ausgebildet sein, um den erreichbaren Referenzpunkt als die aktuelle Position zu ermitteln, wenn der Feldstärkereferenzwert mit dem Feldstärkewert, der momentan aufgenommen ist, innerhalb eines vorbestimmten Werteintervalls übereinstimmt. Bei dem vorbestimmten Werteintervalls kann es sich um ein relatives, auf den Feldstärkereferenzwert bezogenes Intervall handeln, das beispielsweise Werte zwischen 0,51 und 1 umfasst.

Gemäß einem weiteren Aspekt der vorliegenden Erfindung wird zur Positionsbestimmung ein Positionsalgorithmus eingesetzt, der beispielsweise ortsabhängige Referenzdaten (physikalisches Modell) nutzt, die in einer Einlernphase gewonnen werden. Die Positionierung basiert auf dem Abgleich aktueller Messdaten gemäß den Referenzdaten. Eine Beschreibung der Umgebung, beispielsweise in Form der bereits erwähnten kartographischen Karte der Umgebung, bei der es sich im Gegensatz zu dem physikalischen Model um ein logisches Modell handelt, erlaubt es, mögliche Bewegungsrichtungen zu erkennen und unmögliche auszuschließen, beispielsweise eine Bewegung durch eine Wand.

Der Kern des Positionsalgorithmus kann beispielsweise eine Modellierung der Umgebung durch Modelle sein. Ausgangspunkt ist hierbei eine geographische Umgebungsbeschreibung, beispielsweise in der Form eines Bauplans. Die geographische Umgebungsbeschreibung kann ferner Informationen über die Lage von Räumen, Wänden, Durchgängen (Türen, Treppen) und überbauliche Gegebenheiten umfassen. Diese Daten liegen üblicherweise als Papierplan oder CAD-Datei von der Planung des Gebäudes vor. Aus diesem Plan können die Umgebungsmodelle abgeleitet werden.

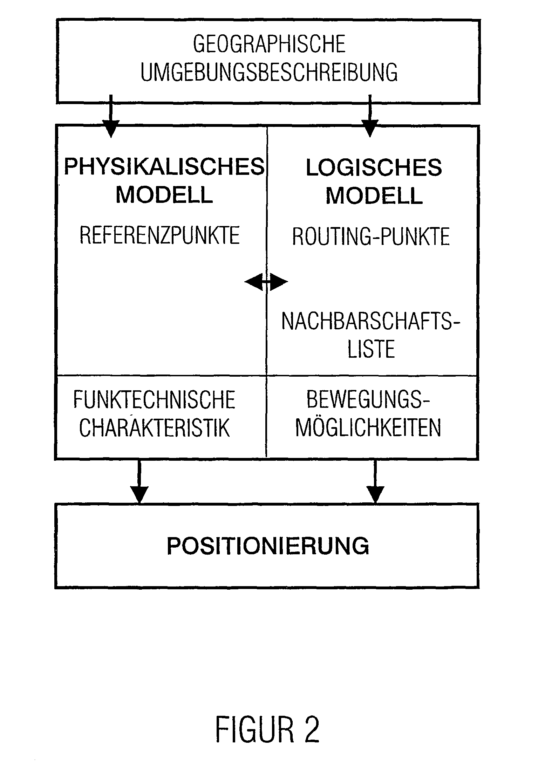

In Fig. 2 ist das erfindungsgemäße Konzept veranschaulicht. Die geographische Umgebungsbeschreibung, beispielsweise in der Form der bereits erwähnten kartographischen Karte der Umgebung, besteht aus einem physikalischen Modell, das beispielsweise Referenzpunkte umfasst, und aus einem logischen Modell, das beispielsweise Routing-Punkte oder Nachbarschaftslisten umfasst. Das physikalische Modell liefert dabei eine funktechnische Charakteristik, wo hingegen aus dem logischen Modell Bewegungsmöglichkeiten abgeleitet werden können. Auf der Basis der funktechnischen Charakteristik und den Bewegungsmöglichkeiten kann die Positionierung durchgeführt werden.

Das physikalische Modell beinhaltet beispielsweise die Ausbreitungscharakteristik der Signale aller Sender, beispielsweise aller Funkbasisstationen, die in der Umgebung aufgestellt sind. Es besteht aus einer Menge von Referenzpunkten, an denen die Feldstärke aller dort empfangbaren Stationen bekannt ist. Das physikalische Modell kann durch beispielsweise explizites Sammeln der Daten in einer Einlernphase gewonnen werden. Obwohl aufwändig, so liefert dieses Verfahren sehr exakte Ergebnisse.

Das logische Modell erlaubt es, schnell und effizient zu entscheiden, ob eine Bewegung zwischen zwei Punkten auf direktem Wege zulässig ist und wie der kürzeste real zurückzulegende Weg zwischen zwei Punkten der Umgebung, beispielsweise zwischen zwei Referenzpunkten, aussieht. Es besteht aus vorher berechneten Routing-Informationen. Zum Aufbau des logischen Modells werden aus der geographischen Umgebungsbeschreibung Räume und Verbindungen zwischen Räumen (Türen, Durchgängen etc.) extrahiert. Dadurch entsteht ein Graph von Räumen. Überall dort, wo im Graph Verbindungen bestehen, ist ein direkter Übergang möglich. Der Graph liefert beispielsweise die Grundlage für eine grobe Wegeberechnung zwischen Punkten in unterschiedlichen Räumen. Die grobe Wegberechnung liefert eine Abfolge von Räumen vom Startraum zum Zielraum. Hierzu können, wie es bereits erwähnt worden ist, Routing-Algorithmen eingesetzt werden, beispielsweise der A*-Algorithmus. Bei dem A*-Algorithmus handelt es sich um eine für eine Wegfindung optimierte Variante des weithin bekannten Algorithmus von Dijkstra.

Zur Feinberechnung des Weges (Wegfindung innerhalb von Räumen oder von einem Punkt in Raum zur Tür) wird, gemäß einem weiteren Aspekt der vorliegednen Erfindung, in jedem Raum eine Menge von Punkten (Routing-Punkten) definiert. Jeder Referenzpunkt im physikalischen Modell ist gleichzeitig ein Routing-Punkt im logischen Modell. Punkte an den Raumübergängen (z. B. Mittelpunkt einer Tür) können ebenfalls als Routing-Punkte definiert werden. Zwischen den Routing-Punkten eines Raumes werden die jeweils kürzesten Wegverläufe vorberechnet, vorbei ebenfalls eine möglicherweise angepasste Form des A*-Routing-Algorithmus zum Einsatz kommen kann, somit nicht eine direkte Verbindung, beispielsweise Luftlinie möglich ist. Durch die Kombination mit der oben beschriebenen Grobberechnung kann nun zwischen allen Referenzpunkten des physikalischen Modells der kürzeste reale Weg effizient berechnet werden.

Das logische Modell kann gemäß einem weiteren Aspekt der vorliegenden Erfindung zusätzlich eine Nachbarschaftsliste umfassen, die jedem Routing-Punkt eine Menge an Nachbarrouting-Punkten zuordnet. Der Maximalabstand an realem Weg ist konfigurierbar und hängt von der erwarteten Maximalgeschwindigkeit der mobilen Endgeräte ab. Die Nachbarschaftsliste wird beim Aufbau des Modells aus den obigen Routing-Informationen gewonnen.

Wie es bereits erwähnt worden ist, können die Referenzdaten in einer Einlernphase gewonnen werden. Beispielsweise werden die Referenzdaten in der Einlernphase an verschiedenen Positionen im Gebäude aufgenommen. Für einen eingelernten Referenzpunkt werden beispielsweise dessen Position (x, y und z) in Realkoordinaten, beispielsweise Metern, sowie eine Liste der an diesem Punkt gehörten Funkbasisstationen mit deren mittleren Feldstärke, deren Standardabweichung und der Empfangshäufigkeit (beispielsweise prozentual) gespeichert. Das Einlernverfahren ist automatisiert und in der Hinsicht, dass der Nutzer sich im Gebäude an beliebige Punkte bewegen kann, und durch einen Klick an den Raumplan, die im System die aktuelle Position vorgibt und damit den Einlernvorgang anstößt. Das System führt daraufhin periodisch eine Scan-Operation mit der Funknetzkarte durch. Dabei werden alle im Empfangsbereich befindlichen Basisstationen detektiert und mit ihrer momentanen Empfangsfeldstärke erfasst.

Die Scan-Operation wird so oft durchgeführt, bis die gelieferten Ergebnisse stabil sind, das heißt, bis sich der Mittelwert der Messwerte jeder einzelnen Basisstation nur noch weniger als ein konfigurierbarer Schwellenwert ändert. Unter Mittelwert wird dabei ein gegen Ausreißer robustes Mittelungsverfahren verstanden, das im Ergebnis dem Median ähnelt, jedoch schneller zu berechnen ist (sog. robuster Mittelwert). Zusätzlich zum Feldstärkewert kann aufgezeichnet werden, wie häufig jede Basisstation gemessen wurde. Kommt es während der Messwertaufnahme zu Aufzeichnungsfehlern oder ergibt sich auch nach einer konfigurierbaren Maximalanzahl von Messungen kein stabiler Mittelwert, z. B. weil der Benutzer während der Messungen weiterläuft, statt am Messpunkt zu bleiben, so wird die Messung abgebrochen und der Benutzer darüber informiert.

Die gewonnenen Informationen (Koordinaten sowie Liste der Basisstationen mit mittlerer Feldstärke, Standardabweichung und Empfangshäufigkeit) werden als Teil des physikalischen Umgebungsmodells in einer Datenbank abgelegt, um nur eine unter vielen Möglichkeiten einer Datenspeicherung zu erwähnen. Nach Abschluss wird der Benutzer informiert und kann sich an einen neuen Punkt bewegen.

Zu Positionsbestimmung werden beispielsweise in regelmäßigen Intervallen aktuelle Messwerte (eine Liste von aktuell im Empfangsbereich befindlichen Basisstationen zusammen mit den zugehörigen Feldstärkewerten) von der Funkkarte ermittelt.

Diese Werte können durch einen konfigurierbaren Filter nachbearbeitet werden, und dadurch werden Fehlmessungen minimiert und es wird die Zuverlässigkeit des Verfahrens erhöht. Bei dem Filter kann es sich beispielsweise um eine gewichtete Mittelung zwischen dem neu gemessenen Wert einer Basisstation und dem im Filter gespeicherten letzten Mittelwert handelt. Zur Mittelung kommt beispielsweise das bereits erwähnte Verfahren (robuster Mittelwert) zum Einsatz. Bevorzugt kommen keine weiteren (z. B. statistischen) Verfahren zur Aufbereitung der Rohdaten zum Einsatz. Nach dieser Phase steht eine Liste von Basisstationen mit geglätteten Feldstärkewerten zur Verfügung.

Anschließend wird aufgrund der letzten berechneten geographischen Position eine Auswahl von Referenzpunkten (Kandidaten-Punkte) getroffen, die als neue Position in Frage kommen. Dies erfolgt beispielsweise in zwei Schritten. Zunächst wird der nächste Routing-Punkt zur letzten berechneten Position (vorherige Position) ermittelt. Anschließend wird die oben erwähnte Nachbarschaftsliste des logischen Modells herangezogen, in der die in Frage kommenden Referenzpunkte nachgeschlagen werden können. Auf diese Weise schließt das logische Modell die Referenzpunkte aus, die zwar geographisch nah sind, aber erst durch einen Umweg real zu erreichen sind.

Aus den Referenzpunkten wird durch einen Abgleich der aktuellen mit den gespeicherten Messwerten ein wahrscheinlichster neuer Referenzpunkt bestimmt, der als eine mögliche aktuelle Position in Frage kommt. In den Abgleich gehen dabei beispielsweise die Unterschiede der Messwerte (Feldstärkeinformation), die in der Einlernphase ermittelte Empfangshäufigkeit, die relative Stärke der Signale unterschiedlicher Stationen (Ordnung der Stationen nach Feldstärke), sowie Referenzen zwischen aktuellen empfangenen Stationen und Stationen in den Referenzpunkten ein. Der unter diesen Gesichtspunkten wahrscheinlichste Referenzpunkt wird in eine Prädiktionseinheit eingespeist. Aus den genannten Kriterien wird zusätzlich ein Gütewert berechnet, der eine Aussage darüber liefert, wie gut der Satz an aktuellen Messwerten auf diesen Referenzpunkt passt.

Die Positionsprädiktionseinheit berechnet beispielsweise unter Zuhilfenahme der Routing-Informationen des logischen Modells aus der letzten Position und der Position des wahrscheinlichsten Referenzpunktes eine neue Position. Damit geht ein, dass der Weg zwischen alter und neuer Position unter Umständen nicht auf direktem Weg überwunden werden kann, da z. B. ein Durchgang nur durch eine Tür in einem Meter Entfernung möglich ist. Die Positionsprädiktionseinheit berechnet daher eine Position auf dem aus dem logischen Umgebungsmodell möglichen Weg von der alten Position zum wahrscheinlichsten Referenzpunkt. Diese Position geht als aktuelle Position in die nächste Iteration der Berechnung ein.

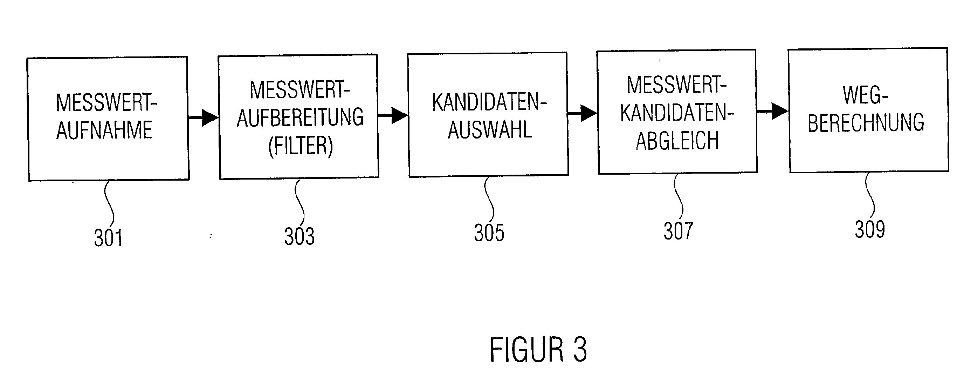

Fig. 3 veranschaulicht eine Struktur des erfindungsgemäßen Verfahrens zum Ermitteln einer aktuellen Position gemäß einem weitern Ausführungsbeispiel der vorliegenden Erfindung.

Zunächst findet im Schritt 301 eine Messwertaufnahme, beispielsweise eine Messung der Feldstärken, statt. In einem weiteren Schritt 303 werden die Messwerte aufgearbeitet, wobei, wie es bereits erwähnt worden ist, eine Filterung vorgenommen wird. Danach findet im Schritt 305 eine Kandidatenauswahl sowie im Schritt 307 eine nachfolgende Messwertkandidatenabgleichung statt. Auf der Basis der Messwertkandidatenabgleichung wird im Schritt 309 eine Wegberechnung durchgeführt.

Gemäß einem weitern Aspekt der vorliegenden Erfindung kann der Positionierungsalgorithmus durch eine Vielzahl an Konfigurationsparametern an die speziellen Verhältnisse angepasst werden. Die Parameter legen beispielsweise fest, in welche Frequenz die Datenerfassung und Neuberechnung der Position erfolgen soll oder von welcher Maximalgeschwindigkeit des mobilen Endgeräts ausgegangen werden kann. Der Algorithmus besteht beispielsweise aus einem Satz ineinandergreifender Teilalgorithmen, die in verschiedenen Varianten vorliegen (z. B. optimiert für eine Messeumgebung oder Büroumgebung). Über die Konfigurationsparameter kann ein aktuell optimaler Satz an Teilalgorithmen zu einem angepassten Gesamtsystem verknüpft werden.

Das erfindungsgemäße Konzept kann beispielsweise innerhalb eines zellularen Funksystems (z. B. WLAN oder DECT) mit mindestens einer Basisstation eingesetzt werden, wobei das Funksystem eine eindeutige Identifikation einer Basisstation ermöglicht.

Das erfindungsgemäße System kann beispielsweise ein Empfängersystem zur Erfassung der Basisstationidentifikation und zur Erfassung der Signalparameter, z. B. Empfangsfeldstärke, RSSI-Datenerfassung (RSSI = radio signal strength indicator) aller zu einem Zeitpunkt der empfangbaren Signale der einzelnen Basisstationen. Das Empfängersystem kann beispielsweise mobil oder fest eingebaut sein, z. B. PDA, Mobiltelefon, Gürtelgerät, Notebook, Uhr, Erweiterungsbox etc.

Das erfindungsgemäße System kann ferner eine Verarbeitungseinheit zur Durchführung der Positionierungsalgorithmen, ein Umgebungsmodell zur Beschreibung der Umgebung, eine Datenbasis mit Referenzwerten der Signalparameter, die in der Umgebung gemessen werden, etc. umfassen.

Das System kann ferner Konfigurationsparameter zur Anpassung der Positionierungsalgorithmen an verschiedene Umgebungsbedingungen oder Prädiktionsmodelle umfassen. Darüber hinaus kann optional eine Nachverarbeitung zur Aufbereitung der Positionsdaten, z. B. Interpolation von Zwischenwerten, Mittelung etc., vorgesehen werden.

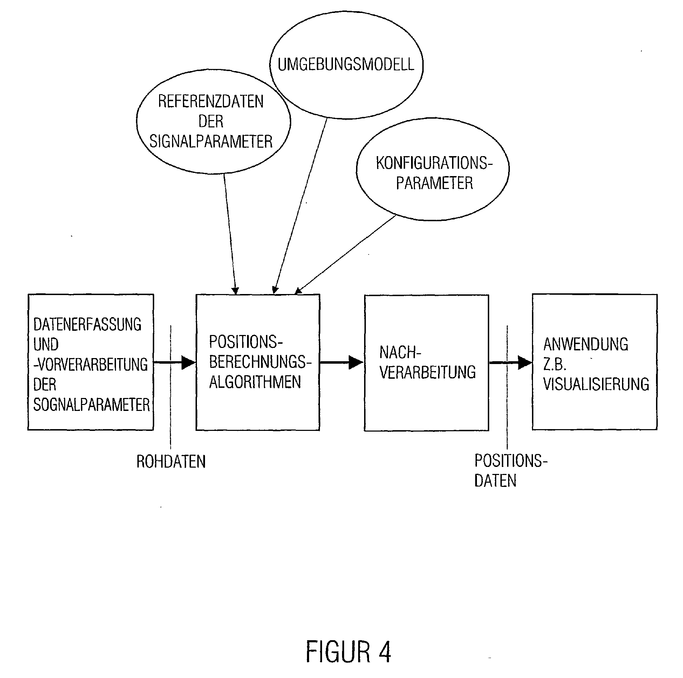

Fig. 4 verdeutlicht das erfindungsgemäße Verfahren zur Ermittlung der aktuellen Position gemäß einem weiteren Ausführungsbeispiel der vorliegenden Erfindung.

Die Datenerfassung erfolgt auf dem Gerät, für welches die Position bestimmt werden soll. Alle weiteren Verarbeitungseinheiten können verteilt werden, das heißt, man ergänzt dann das Verfahren mit einer Einheit zur Übertragung der Erfassungsdaten, der Zwischenergebnisse oder der berechneten Positionsdaten mit dem Ziel einer Weiterverarbeitung in einem weiterführenden Netzwerk mit verteilten Verarbeitungseinheiten oder in eine Zentraleinheit.

Gemäß einem weitern Aspekt der vorliegenden Erfindung werden beispielsweise in einer Einlernphase Referenzmessungen der Signalparameter an Punkten der Zielumgebung, z. B. mögliche Aufenthaltsorte, vorgenommen. Diese werden aufbereitet und in einer Datenbasis gespeichert. Gemäß einem weiteren Ausführungsbeispiel werden in einem Umgebungsmodell bevorzugt in einem Koordinatensystem die Eigenschaften und Gegebenheiten, wie z. B. Wände, Typ, Türen, unmögliche Bereiche, Treppen, etc. beschrieben. Es ergibt sich damit eine logische und physikalische Beschreibung der Umgebung.

Die Konfigurationsparameter enthalten Informationen zur Steuerung der Algorithmen, wie z. B. maximale Geschwindigkeiten der mobilen Endgeräte, Gewichtungsfaktoren etc. Möglich sind Profile für gewisse Zielanwendungen, welche durch einen Satz an Konfigurationsparametern gekennzeichnet sind.

Zur Positionsberechnung werden aktuelle Signalparameter erfasst, verarbeitet und als Rohdaten dem Positionsalgorithmus übergeben. Dieser ermittelt unter Zuhilfenahme der Referenzmessungen, der Umgebungsbeschreibung und der Konfigurationsparameter den wahrscheinlichsten Aufenthaltsort.

Durch eine Einbeziehung der Umgebungsmodellierung wird eine Erhöhung der Genauigkeit erreicht, da die erfindungsgemäße Umgebungsmodellierung selbständig nicht-mögliche Wege ausschließt, wie z. B. Gang durch eine Wand.

Die vorliegende Erfindung schafft, gemäß einem weiteren Aspekt, ein Positionierungssystem mit einer Vorrichtung zum Bestimmen der aktuellen Position, wie sie obenstehend beschrieben ist. Das System umfasst beispielsweise eine oder mehrere Antennen, um die Signale der Sender (Basisbandstationen zu empfangen). Das System kann beispielsweise von einem mobilen Gerät, z. B. einem Mobiltelefon, und der Vorrichtung zum Ermitteln der aktuellen Position gebildet sein. Das Positionierungssystem kann ferner alle oben Beschrieben Funktionalitäten in beliebiger Kombination umfassen.

Gemäß einem weiteren Aspekt der vorliegenden Erfindung kann das System jedoch stationär sein und zentral wie von einer Mehrzahl von in den Räumen aufgestellten Antennen detektierte Signale der Basisbandstationen auswerten, um beispielsweise die beschriebene kartographische Karte der Umgebung zu erstellen.

Gemäß einem weiteren Aspekt der vorliegenden Erfindung können in einem erfindungsgemäßen Positionierungssystem mehrere Antennen verwendet werden, um aufgrund der damit erreichten Antennendiversität eine genauere und zuverlässige Bestimmung der RSSI-Werte zu erzielen.

Gemäß einem weiteren Aspekt der vorliegenden Erfindung kann ein Kompass zur Verbesserung der räumlichen Orientierung des Benutzers, das heißt des mobilen Endgerätes, verwendet werden. In diesem Fall umfasst beispielsweise die erfindungsgemäße Vorrichtung zum Ermitteln der aktuellen Position einen Kompass.

Gemäß einem weitern Aspekt der vorliegenden Erfindung kann die Vorrichtung zum Ermitteln der aktuellen Position ferner Sensorsysteme, z. B. Geschwindigkeits- oder Beschleunigungssensoren, umfassen, die auf spezielle Applikationen, wie z. B. Laufen, Fahren etc., angepasst sind, um eine optimierte Positions- und Orientierungsbestimmung zu ermöglichen. Gemäß einem weiteren Aspekt der vorliegenden Erfindung kann beispielsweise in einem Endgerät eine Kombination des Empfängers mit inertialen Sensor-Systemen, wie z. B. oben beschrieben, vorgesehen werden.

Gemäß einem weiteren Aspekt der vorliegenden Erfindung kann in einem Empfänger, bei dem es sich beispielsweise um das erfindungsgemäße System zur Positionsbestimmung handeln kann, eine Kombination verschiedener Funksysteme, wie z.B. DECT, WLAN, Bluetooth, vorgesehen werden, um die Flächendeckung des Navigationssystems und die Genauigkeit der Positionslösung zu verbessern. Eine optimierte Unterstützung des Benutzers kann somit erreicht werden.

Gemäß einem weiteren Aspekt der vorliegenden Erfindung kann eine Kombination mit anderen Lokalisierungsverfahren, z. B. GPS, Ultraschall, Infrarot, Abstandsmessverfahren usw. vorgesehen werden, um die Positionsbestimmung unter Umständen effizienter zu gestalten.

Gemäß einem weiteren Aspekt der vorliegenden Erfindung wird eine Steuereinheit eingesetzt, die zeitlich oder ereignisgesteuert eine Positionserfassung, Positionsberechnung oder Positionsübermittlung steuert. Die Steuereinheit kann beispielsweise von der erfindungsgemäßen Vorrichtung zum Ermitteln der aktuellen Position umfasst sein und beispielsweise aufgrund einer detektierten Bewegung (Ereignissteuerung) eine Ermittlung der aktuellen Position auszulösen.

Gemäß einem weiteren Aspekt der vorliegenden Erfindung können unterschiedliche Sätze an Konfigurationsparametern (Profile) verwendet werden, die ferner eine adaptive Anpassung erfassen können.

Neben den bereits beschriebenen Vorteilen kann das erfindungsgemäße Positionierungssystem in Abhängigkeit des verwendeten Funksystems auch rein passiv realisiert werden, das heißt, es ist keine Subscription, Anmeldung oder ähnliches am Netzwerk notwendig. Dadurch lassen sich insbesondere vorhandene Systeme, wie z. B. WLAN-Netzwerke oder DECT-Telefonanlagen in Bürogebäuden, Flughäfen oder etc. ohne technische Erweiterung verwenden. Mobile Systeme mit Positionsbestimmung lassen sich einfach ohne Administration des Netzwerkes oder der Telefonanlage in das System einbringen und betreiben. Durch das passive Verhalten entstehen ferner keine störenden Einflüsse auf die Funktionalität und Verfügbarkeit des Funksystems.

Darüber hinaus ist das erfindungsgemäße System durch seine Parametrisierbarkeit, bei der beispielsweise folgende Parameter verwendet werden: Kanalmodelle, Basisstationsinformationen, Umgebungsinformationen, universell an neue Umgebungen adaptierbar bzw. dynamisch vor Ort nachladbar.

Gemäß einem weiteren Ausführungsbeispiel der vorliegenden Erfindung kann ein Personal Digital Assistent (PDA) mit einer WLAN PCMCIA-Einsteckkarte erweitert werden. Dadurch lassen sich eindeutige MAC-Adressen der Basisstationen und die dazugehörigen Empfangsfeldstärken ermitteln.

Eine Treiber-Software beinhaltet alle weiteren, oben beschriebenen Komponenten und stellt einer Visualisierungsoberfläche auf Anfrage die Positionsdaten zur Verfügung. Als Eingabeparameter verwendet die Treibersoftwareinformationen über die Basisstationen, die Umgebung und weitere Konfigurationsdaten. Mit solchen Systemen kann dann z. B. ein Führungs- oder Informationssystem realisiert werden.

Gemäß einem weiteren Aspekt der vorliegenden Erfindung umfasst die erfindungsgemäße Vorrichtung zum Ermitteln der aktuellen Position einen Bildschirm, der ausgebildet ist, um die ermittelte, aktuelle Position in der Umgebung anzuzeigen.

Abhängig von den Gegebenheiten können die erfindungsgemäßen Verfahren in Hardware oder in Software implementiert werden. Die Implementierung kann auf einem digitalen Speichermedium, beispielsweise einer Diskette oder CD mit elektronisch auslesbaren Steuersignalen erfolgen, die so mit einem programmierbaren Computersystem zusammenwirken können, dass das entsprechende Verfahren ausgeführt wird. Allgemein besteht die Erfindung somit auch in einem Computerprogrammprodukt mit einem auf einem maschinenlesbaren Träger gespeicherten Programmcode zur Durchführung des jeweiligen erfindungsgemäßen Verfahrens, wenn das Computerprogrammprodukt auf einem Rechner abläuft. In anderen Worten ausgedrückt, kann die Erfindung somit auch als ein Computer-Programmcode zur Durchführung zumindest eines Verfahrens rasiert werden, wenn das Computerprogramm auf einem Computer abläuft.

## Patentansprüche

1. Vorrichtung zum Ermitteln einer aktuellen Position eines mobilen Gerätes in einer Umgebung, in der zumindest ein Sender angeordnet ist, mit den folgenden Merkmalen:
einer Einrichtung (101) zum Liefern einer kartographischen Karte der Umgebung, wobei die kartographische Karte Feldstärkereferenzwerte an Referenzpunkten umfasst;
einer Einrichtung (107) zum Ermitteln eines Feldstärkewertes;
einer Einrichtung (103) zum Ableiten erreichbarer Referenzpunkte, die ausgehend von einer vorherigen Position des mobilen Gerätes durch Bewegung des mobilen - Gerätes in der Umgebung innerhalb eines vorbestimmten Zeitintervalls erreichbar sind, aus der kartographischen Karte der Umgebung; und
einem Vergleicher (105) zum Vergleichen des Feldstärkewertes mit den Feldstärkereferenzwerten an den erreichbaren Referenzpunkten,
**dadurch gekennzeichnet, dass** der Referenzpunkt, dessen Feldstärkereferenzwert dem Feldstärkewert am ehesten entspricht, als aktuelle Position festgelegt wird.

2. Vorrichtung gemäß Anspruch 1, wobei die Einrichtung (107) zum Ermitteln eines Feldstärkewertes ausgebildet ist, um den Feldstärkewert an der aktuellen Position zu messen.

3. Vorrichtung gemäß Anspruch 1 oder 2, wobei die Einrichtung (107) zum Ermitteln eines Feldstärkewertes ausgebildet ist, um Feldstärkewerte in regelmäßigen Messintervallen zu messen.

4. Vorrichtung gemäß einem der Ansprüche 1 bis 3, wobei die Einrichtung (107) zum Ermitteln eines Feldstärkewertes ausgebildet ist, um die Feldstärkereferenzwerte zu ermitteln.

5. Vorrichtung gemäß Anspruch 4, wobei die Einrichtung (107) zum Ermitteln eines Feldstärkewertes ausgebildet ist, um einen Feldstärkereferenzwert durch eine Mittelung zwischen einem aktuell gemessenen Feldstärkewert und einem zu einem frühren Zeitpunkt bestimmten Mittelwert von gemessenen Feldstärkewerten zu bestimmen.

6. Vorrichtung gemäß einem der Ansprüche 1 bis 5, wobei die Einrichtung (101) zum Liefern der kartographischen Karte ausgebildet ist, um einen Feldstärkewert in die kartographische Karte der Umgebung an einem dazugehörigen Referenzpunkt einzutragen, um die kartographische Karte zu aktualisieren.

7. Vorrichtung gemäß einem der Ansprüche 1 bis 6, wobei die Einrichtung (103) zum Ableiten eines erreichbaren Referenzpunktes ausgebildet ist, um eine Routing-Karte zu erstellen, wobei die Routing-Karte mögliche Verbindungen zwischen Referenzpunkten umfasst, die durch Bewegung des mobilen Gerätes erreichbar sind.

8. Vorrichtung gemäß Anspruch 7, wobei die Einrichtung (103) zum Ableiten des erreichbaren Referenzpunktes ausgebildet ist, um eine kürzeste Verbindung zwischen einem ersten Referenzpunkt und einem zweiten Referenzpunkt zu bestimmen.

9. Vorrichtung gemäß den Ansprüchen 7 oder 8, wobei die Einrichtung (103)zum Ableiten des erreichbaren Referenzpunktes ausgebildet ist, um die Routing-Karte unter Verwendung eines Routing-Algorithmus zu bestimmen.

10. Vorrichtung gemäß einem der Ansprüche 1 bis 9, wobei die Einrichtung (103) zum Ableiten des erreichbaren Referenzpunktes ausgebildet ist, um den erreichbaren Referenzpunkt unter Verwendung eines Routing-Algorithmus zu bestimmen.

11. Vorrichtung gemäß einem der Ansprüche 1 bis 10, wobei der Vergleicher (105) ausgebildet ist, um den erreichbaren Referenzpunkt als die aktuelle Position zu ermitteln, wenn der Feldstärkereferenzwert mit dem Feldstärkewert an der aktuellen Position innerhalb eines vorbestimmten Werteintervalls übereinstimmt.

12. Verfahren zum Ermitteln einer aktuellen Position eines mobilen Gerätes innerhalb einer Umgebung, in der zumindest ein Sender angeordnet ist, mit folgenden Merkmalen:
Liefern einer kartographischen Karte der Umgebung, wobei die kartographische Karte der Umgebung Feldstärkereferenzwerte an Referenzpunkten umfasst;
Ermitteln eines Feldstärkewertes an der aktuellen Position;
Ableiten erreichbarer Referenzpunkte, die ausgehend von einer vorherigen Position des mobilen Endgerätes durch Bewegung des mobilen Endgerätes in der Umgebung innerhalb eines vorbestimmten Zeitintervalls erreichbar sind, aus der kartographischen Karte der Umgebung; und
Vergleichen des Feldstärkewertes mit den Feldstärkereferenzwerten an den erreichbaren Referenzpunkten,
**gekennzeichnet durch** den Schritt des Festlegens des Referenzpunkts, dessen Feldstärkereferenzwert dem Feldstärkewert am ehesten entspricht, als aktuelle Position.

13. Computerprogramm mit einem Programmcode zur Durchführung des Verfahrens gemäß Anspruch 12, wenn das Programm auf einem Computer abläuft.

## Claims

1. Apparatus for determining the current position of a mobile device in an environment in which at least one transmitter is disposed, comprising:
a means (101) for providing a cartographic map of the environment, the cartographic map including field strength reference values at reference points;
a means (107) for determining a field strength value;
a means (103) for deriving reference points within reach that can be reached starting from a previous position of the mobile device by movement of the mobile device in the environment within a predetermined time interval, from the cartographic map of the environment; and
a comparator (105) for comparing the field strength value with the field strength reference values at the reference points within reach,
**characterized in that** the reference point the field strength reference value of which most likely corresponds to the field strength value is established as current position.

2. Apparatus of claim 1, wherein the means (107) for determining the field strength value is formed to measure the field strength value at the current position.

3. Apparatus of claim 1 or 2, wherein the means (107) for determining a field strength value is formed to measure field strength values at regular measurement intervals.

4. Apparatus of one of claims 1 to 3, wherein the means (107) for determining a field strength value is formed to determine the field strength reference values.

5. Apparatus of claim 4, wherein the means (107) for determining a field strength value is formed to determine a field strength reference value by averaging among the currently measured field strength value and a mean value of measured field strength values determined at an earlier point in time.

6. Apparatus of one of claims 1 to 5, wherein the means (101) for providing the cartographic map is formed to enter a field strength value into the cartographic map of the environment at an accompanying reference point in order to update the cartographic map.

7. Apparatus of one of claims 1 to 6, wherein the means (103) for deriving a reference point within reach is formed to establish a routing map, the routing map including possible connections between reference points that can be reached by movement of the mobile device.

8. Apparatus of claim 7, wherein the means (103) for deriving the reference point within reach is formed to determine a shortest connection between a first reference point and a second reference point.

9. Apparatus of claim 7 or 8, wherein the means (103) for deriving the reference point within reach is formed to determine the routing map using a routing algorithm.

10. Apparatus of one of claims 1 to 9, wherein the means (103) for deriving the reference point within reach is formed to determine the reference point within reach using a routing algorithm.

11. Apparatus of one of claims 1 to 10, wherein the comparator (105) is formed to determine the reference point within reach as the current position if the field strength reference value matches the field strength value at the current position within a predetermined value interval.

12. Method for determining a current position of a mobile device within an environment in which at least one transmitter is disposed, comprising:
providing a cartographic map of the environment, the cartographic map of the environment including field strength reference values at reference points;
determining a field strength value at the current position;
deriving reference points within reach that can be reached starting from a previous position of the mobile terminal by movement of the mobile terminal in the environment within a predetermined time interval, from the cartographic map of the environment; and
comparing the field strength value to the field strength reference values at the reference points within reach,
**characterized by** the step of establishing the reference point the field strength reference value of which most likely corresponds to the field strength value as current position.

13. Computer program with a program code for performing the method of claim 12, when the program is executed on a computer.

## Revendications

1. Dispositif pour déterminer une position actuelle d'un appareil mobile dans un environnement dans lequel est disposé au moins un émetteur, aux caractéristiques suivantes:
un moyen (101) destiné à fournir une carte cartographique de l'environnement, la carte cartographique comprenant des valeurs de référence d'intensité de champ à des points de référence;
un moyen (107) destiné à déterminer une valeur d'intensité de champ;
un moyen (103) destiné à dériver de la carte cartographique de l'environnement des points de référence pouvant être atteints qui peuvent être atteints à partir d'une position précédente de l'appareil mobile par déplacement de l'appareil mobile dans l'environnement dans un intervalle de temps prédéterminé; et
un comparateur (105) destiné à comparer la valeur d'intensité de champ avec les valeurs de référence d'intensité de champ aux points de référence pouvant être atteints,
**caractérisé par le fait que** le point de référence dont la valeur de référence d'intensité de champ correspond le plus à la valeur d'intensité de champ est fixée comme position actuelle.

2. Dispositif selon la revendication 1, dans lequel le moyen (107) destiné à déterminer une valeur d'intensité de champ est réalisé de manière à mesurer la valeur d'intensité de champ à la position actuelle.

3. Dispositif selon la revendication 1 ou 2, dans lequel le moyen (107) destiné à déterminer une valeur d'intensité de champ est réalisé de manière à mesurer des valeurs d'intensité de champ à des intervalles de mesure réguliers.

4. Dispositif selon l'une des revendications 1 à 3, dans lequel le moyen (107) destiné à déterminer une valeur d'intensité de champ est réalisé de manière à déterminer les valeurs de référence d'intensité de champ.

5. Dispositif selon la revendication 4, dans lequel le moyen (107) destiné à déterminer une valeur d'intensité de champ est réalisé de manière à déterminer une valeur de référence d'intensité de champ par l'établissement d'une moyenne entre une valeur d'intensité de champ mesurée actuelle et une valeur moyenne déterminée à un moment antérieur de valeurs d'intensité de champ mesurées.

6. Dispositif selon l'une des revendications 1 à 5, dans lequel le moyen (101) destiné à fournir la carte cartographique est réalisée de manière à entrer une valeur d'intensité de champ dans la carte cartographique de l'environnement à un point de référence associé, pour mettre à jour la carte cartographique.

7. Dispositif selon l'une des revendications 1 à 6, dans lequel le moyen (103) destiné à dériver un point de référence pouvant être atteint est réalisé de manière à réaliser une carte de routage, la carte de routage comportant des connexions possibles entre points de référence qui peuvent être atteints par déplacement de l'appareil mobile.

8. Dispositif selon la revendication 7, dans lequel le moyen (103) destiné à dériver le point de référence pouvant être atteint est réalisé de manière à déterminer une connexion la plus courte entre un premier point de référence et un deuxième point de référence.

9. Dispositif selon les revendications 7 ou 8, dans lequel le moyen (103) destiné à dériver le point de référence pouvant être atteint est réalisé de manière à déterminer la carte de routage à l'aide d'un algorithme de routage.

10. Dispositif selon l'une des revendications 1 à 9, dans lequel le moyen (103) destiné à dériver le point de référence pouvant être atteint est réalisé de manière à déterminer le point de référence pouvant être atteint à l'aide d'un algorithme de routage.

11. Dispositif selon l'une des revendications 1 à 10, dans lequel le comparateur (105) est réalisé de manière à déterminer le point de référence pouvant être atteint comme la position actuelle lorsque la valeur de référence d'intensité de champ coïncide avec la valeur d'intensité de champ à la position actuelle dans un intervalle de valeurs prédéterminé.

12. Procédé pour déterminer une position actuelle d'un appareil mobile dans un environnement dans lequel est disposé au moins un émetteur, aux caractéristiques suivantes:
fournir une carte cartographique de l'environnement, la carte cartographique de l'environnement comportant des valeurs de référence d'intensité de champ à des points de référence;
déterminer une valeur d'intensité de champ à la position actuelle;
dériver de la carte cartographique de l'environnement des points de référence pouvant être atteints qui peuvent être atteints à partir d'une position précédente de l'appareil mobile par déplacement de l'appareil mobile dans l'environnement dans un intervalle de temps prédéterminé; et
comparer la valeur d'intensité de champ avec les valeurs de référence d'intensité de champ à des points de référence pouvant être atteints,
**caractérisé par** l'étape consistant à fixer comme position actuelle le point de référence dont la valeur de référence d'intensité de champ correspond le plus à la valeur d'intensité de champ.

13. Programme d'ordinateur avec un code de programme pour réaliser le procédé selon la revendication 12 lorsque le programme est exécuté sur un ordinateur.
